# EUROPEAN PATENT SPECIFICATION

(11) **EP 1 437 374 B1**
(45) Date of publication and mention of the grant of the patent: **05.09.2007**
(21) Application number: 04075060.6
(22) Date of filing: 08.01.2004
(51) Int. Cl.: C08G 77/46

(54) **Highly pure polyethersilicone**
Hochreine Polyethersilicone
Polyéthersilicone extrêmement pur

(30) Priority: 09.01.2003 JP 2003002708; 29.10.2003 JP 2003368427; 16.12.2003 JP 2003417667
(43) Date of publication of application: 14.07.2004
(73) Proprietor: Shin-Etsu Chemical Company, Ltd., Tokyo 100-0004 (JP)
(72) Inventor: Ichinohe, Shoji, c/o Shin-Etsu Chemical Co. Ltd., Usui-gun, Gunma 379-0222 (JP)
(74) Representative: Prins, Adrianus Willem

(56) References cited:
- EP-A- 0 995 771
- US-A- 4 150 048

## Description

### CROSS REFERENCES

This application claims the benefits of Japanese Patent application No. 2003-002708 filed on January 9, 2003, Japanese Patent application No. 2003-368427 filed on October 29,2003, and Japanese Patent application No. 2003-417667 filed on December 16,2003, the contents of which are hereby incorporated by reference.

### FIELD OF THE INVENTION

This invention relates to a highly pure polyethersilicone and a method for producing the same. The polyethersilicone can be used as a solvent for an electrolyte to give an electrolytic solution having a high ionic conductivity and also comprises a less amount of impurities having low flash points.

### DESCRIPTION OF THE PRIOR ART

A nonaqueous solvent is used in various kinds of batteries. Examples of such solvents include ethylene carbonate, propylene carbonate, dimethyl carbonate, and diethyl carbonate. Among these, dimethyl carbonate, diethyl carbonate, and propylene carbonate are liquid at room temperature. Especially, dimethyl carbonate and diethyl carbonate have flash points of so low as 17 degrees C and 46 degrees C, respectively, and, therefore, have safety problems. A polyethersilicone is known as a solvent safer than those carbonates with low flash points. For example, Japanese Patent Laid-open No. 2001-110455 discloses a polyethersilicone which is end-capped with a trimethylsilyl group. However, the polyethersilicone needs further improvement in an ionic conductivity of an electrolytic solution comprising the polyethersilicone as a solvent.

Further, in EP 0995 771 A2 a polyethersilicone has been described wherein the bridging group between the silicone backbone and the polyether moiety contains two carbon atoms. In accordance with this document an organic polysiloxane is modified by reacting a vinyloxy polyoxyalkene compound and a silicone, whereby polymerisation between the compounds should be avoided. In addition it is observed that from US 4,150,048 a process is known for making nonhydrolyzable siloxane organic ether block polymers. The block copolymers are prepared in a polymerisation process by reacting an organic ether having two CH₂=C(R)CH₂-endgroups per molecule with organohydrosiloxanes under hydrosilation reaction conditions in the presence of a platinum catalyst.

Thus, an object of the present invention is to provide a polyethersilicone that gives an electrolytic solution having a higher ionic conductivity and contains a less amount of impurity polyether.

### SUMMARY OF THE INVENTION

The present inventor has found that a polyethersilicone having a specific structure and a purity attains the above object. Thus, the present invention is:
a polyethersilicone represented by the following formula (1), said polyethersilicone being modified at an end of a silicone chain thereof, 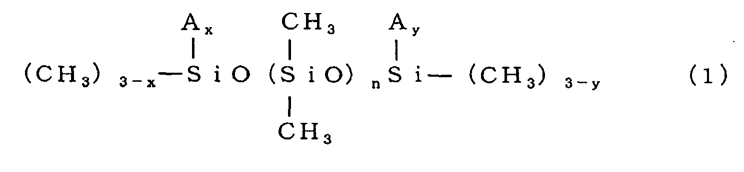 wherein A represents a polyether residue, n is an integer of from 0 to 3, x is 0 or 1, y is 0 or 1 and 1≦x+y, characterized in that
a weight ratio, determined by H-NMR, of a polyether which is not bonded to a silicone chain of the polyethersilicone to a total of the non-bonded polyether and the polyether residue bonded to the silicone chain of the polyethersilicone is 8 % or less.

The preferred embodiments of the above polyethersilicone are as follows.

The polyethersilicone described above, wherein at least one A is -CₐH₂ₐO (C₂H₄O)_{b}R,
wherein a is 3 or 4, b is an integer of from 1 to 3, and R is a CH₃ group or a C₂H₅ group.

The polyethersilicone described above, wherein at least one A is -CH₂CH (CH₃) CH₂O (C₂H₄O)_{c}R,
wherein c is an integer of from 1 to 6, and R is a CH₃ group or a C₂H₅ group.

The polyethersilicone described above, wherein the polyethersilicone has a viscosity at 25 degrees C of from 1 to 20 mm²/s.

The polyethersilicone described above, wherein the polyethersilicone is one prepared by reacting a polyether having a methallyl group, a butenyl group or an allyl group at an end thereof with a hydrogensilicone having a hydrosilyl group at least one end thereof in the presence of a noble metal catalyst.

Another aspect of the present invention is a solvent for an electrolytic solution, comprising the polyethersilicone described above.

Still another aspect of the present invention is a method of preparing a polyethersilicone by reacting a polyether having an unsaturated bond at an end thereof with a hydrogensilicone in the presence of a noble metal catalyst, characterized in that the method comprising the steps of:
reacting a polyether represented by the following formula (3) or (4) with a hydrogensilicone,

   CₐH₂ₐ₋₁O (C₂H₄O)_{b}R (3)
wherein a is 3 or 4, b is an integer of from 1 to 3, and R is a CH₃ group or a C₂H₅ group, 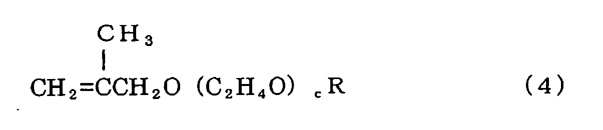 wherein c is an integer of from 1 to 6, and R is a CH₃ group or a C₂H₅ group, and
subjecting the reaction mixture to vacuum distillation,
to thereby attain a weight ratio, determined by H-NMR, of the polyether which has not been reacted with the hydrogensilicone to the starting polyether of 8 % or less.

The aforesaid present polyethersilicone gives an electrolytic solution having a higher conductivity than the conventional polyethersilicones. Further, the present polyethersilicone contains a little amount of impurities with low flash points, and, consequently, it is safer.

### DESCRIPTION OF THE PREFERRED EMBODIMENTS

The present invention will be explained in detail below. The present polyethersilicone is characterized in that it has a polyether chain at an end of the silicone chain. It has been found that the present polyethersilicone gives an electrolytic solution having a higher conductivity than the aforesaid conventional polyethersilicone which is end-capped with trimethylsilyl groups and has a polyether side chain. The present polyethersilicone may be prepared by reacting a hydrogendimethylpolysiloxane having a hydrosilyl group on at least one end with a polyether having a double bond at one end. Examples of the hydrogendimethylpolysiloxane include those represented by the following general formula (2). 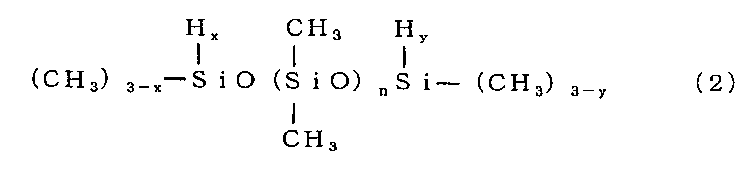 wherein n is an integer of from 0 to 3, x is 0 or 1, y is 0 or 1 and 1 ≦ x+y.

Examples of the polyether having a double bond at one end include those represented by the following formula (3).

CₐH₂ₐ₋₁O(C₂H₄O)_{b}R (3)

wherein a is 3 or 4, preferably 3, b is an integer of from 1 to 3, preferably 1 or 2, and R is a methyl group or an ethyl group.

More specifically, the following polyethers with low boiling points are named as examples of the polyether having a double bond at one end.

CH₂ =CHCH₂O(C₂H₄O)CH₃

CH₂ =CHCH₂O(C₂H₄O)₂CH₃

CH₂ =CHCH₂O(C₂H₄O)C₂H₅

CH₂ =CHCH₂O(C₂H₄O)₂C₂H₅

The reaction of the hydrogendimethylpolysiloxane (2) with the polyether (3) may be carried out in the presence a solvent or without a solvent. A preferred catalyst is a platinum catalyst derived from chloroplatinic acid. The reaction is preferably carried out by feeding the hydrogendimethylpolysiloxane (2) in a reaction vessel, to which a mixture of the catalyst and the polyether (3) having a double bond at one end are then added dropwise, or by feeding a mixture of the catalyst and the polyether (3) in a reaction vessel, to which the hydrogendimethylpolysiloxane (2) is then added dropwise. Preferably, the reaction is carried out under a nitrogen flow to prevent oxidation of the polyether.

Many of the hydrogendimethylpolysiloxane (2) have boiling points of 100 degrees C or lower. Therefore, when adding the hydrogendimethylpolysiloxane (2) dropwise, a temperature in a reaction vessel is preferably 100 degrees C or lower to prevent the hydrogendimethylpolysiloxane (2) from evaporating. After completing the addition, the temperature in the reaction vessel may be raised to at most 120 degrees C, at which temperature the reaction is continued for several hours to complete.

A molar ratio of the unsaturated bond in the polyether (3) to the SiH group in the hydrogendimethylpolysiloxane (2), hereinafter referred to as Vi/SiH, may range from 0.5 to 1.2, preferably from 0.6 to 0.9. Preferably, the reaction is carried out at a ratio of smaller than 1 and, then, an excess amount of the hydrogendimethylpolysiloxane (2) and unreacted polyether are removed by vacuum distillation. The amount of unreacted polyether is thus minimized to obtain a purer and safer polyethersilicone.

It has been found that as much as about 15 wt% of the fed polyether is not bonded to the hydrogendimethylpolysiloxane (2) if the hydrogendimethylpolysiloxane (2) is reacted with a polyether having a CH₂=CHCH₂ group in a molar ratio, Vi/SiH, of about 1. A reason for this may be that, in the case of an allyl group such as 2-propenyl group, a 2,3-double bond is converted to a 1,2-double bond, and the 1-propenyl group thus formed does not additively react with the hydrogendimethylpolysiloxane (2). Because a polyether having the 1-propenyl group at an end has a flash point lower than that of the polyethersilicone, the polyether having the 1-propenyl group at an end remaining in the polyethersilicone may lower safety of the polyethersilicone, which is undesirable.

The present invention solves the above problem by using the polyether represented by the formula (3) wherein a is 3 or 4, preferably 3, R is a methyl group or an ethyl group, and b is 3 or smaller, preferably 1 or 2. After the reaction, the polyether which has not reacted with the polysiloxane can be efficiently removed by vacuum distillation. As a result, a weight ratio of the unreacted polyether to the starting raw material polyether, i.e., a total weight of the non-bonded polyether and the polyether residues bonded to the polyethersilicone obtained, can be 8% or less, preferably 6 % or less, most preferably 5 % or less. In the present invention, the weight ratio of unreacted polyether, which hereinafter may be referred to as a free polyether, was determined by H-NMR and capillary gas chromatography of which details will be described below. The weight ratio is preferably zero, but practically may be about 1 % in industrial scale production, which is a detection limit in H-NMR.

The present polyethersilicone may be prepared also by reacting the aforesaid hydrogendimethylpolysiloxane (2) with the polyether represented by the following formula (4). 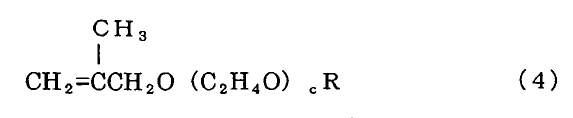 wherein c is an integer of from 1 to 6 and R is a CH₃ or a C₂H₅ group.

More specifically, the following polyether with low boiling points may be named as examples of the polyether having a double bond at one end.

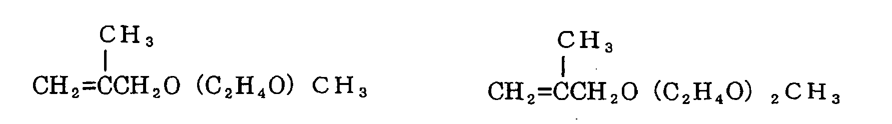

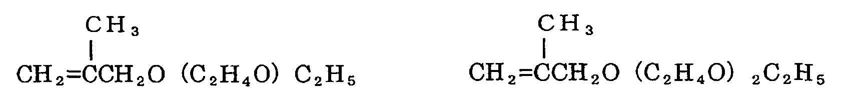

The reaction of the hydrogendimethylpolysiloxane (2) with the polyether of the formula (4) can be carried out under similar conditions as those employed in the aforesaid reaction of the hydrogendimethylpolysiloxane (2) with the polyether of the formula (3). The polyether of the formula (4) wherein c is an integer of from 1 to 3 is used preferably in such an amount that the ratio, Vi/SiH, larger than 1, because unreacted polyether can be easily removed by vacuum distillation.

It has been found that, when the polyether represented by the formula (4) is reacted with the hydrogendimethylpolysiloxane (2) in such an amount that the ratio, Vi/SiH, is about 1, a weight ratio of the unreacted polyether to the starting raw material polyether can be 8 % or less, preferably 5 % or less, more preferably 4 % or less, most preferably the detection limit in capillary gas chromatographic analysis, i.e., about 100 ppm, or less.

The above polyether of the formula (3) and the polyether of the formula (4) can be used alone or in a mixture of (3) and (4) . Preferably, the polyether of the formula (4) having a methallyl group at an end is used in a more amount than the polyether of the formula (3).

The present polyethersilicone is modified with the polyether at a silicone end thereof and has been found to give an electrolytic solution having a higher conductivity than the conventional silicone having a polyether side-chain. The present polyethersilicone can be used alone as a solvent for an electrolyte, but preferably in a combination with a known solvent such as ethylene carbonate, propylene carbonate, dimethyl carbonate, and diethyl carbonate, depending on an electrolyte and its solubility, among which ethylene carbonate is preferred.

The present polyethersilicone has a viscosity at 25 degrees C of from 1 to 20 mm²/s, preferably from 2 to 15 mm²/s, more preferably from 4 to 10 mm²/s. It has been found that a lower viscosity leads to a little higher ionic conductivity of an electrolytic solution. In the present invention, viscosity was measured on a polyethersilicone which still contains polyether which could not be removed by vacuum distillation.

### EXAMPLES

The present invention will be explained with reference to the following non-limiting Examples. In the following, the term " Vi/SiH" means a molar ratio of an unsaturated group in the polyether to a SiH group in the hydrogendimethylpolysiloxane.

### Example 1

A reaction was carried out at a Vi/SiH ratio of 1/1.2.

In a flask, 218 g, i.e., 1 mole, of the polyether of the following formula (5) and 0.5 g of a 0.5% solution of chloroplatinic acid in toluene were placed, and heated to 70 degrees C under a nitrogen flow.

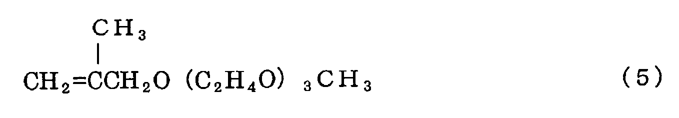

Then, 178 g, i.e., 1.2 moles, of the pentamethyldisiloxane of the formula (6) having a boiling point of 85 degrees C were added dropwise at 70 degrees C in 30 minutes. During the addition, the temperature in the flask rose to 90 degrees C. Subsequently, the temperature was raised to 110 degrees C by heating and the reaction was allowed to continue at 110 degrees C for 3 hours.

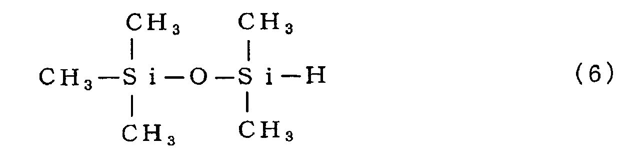

The reaction solution thus obtained was subjected to distillation under a vacuum of about 10 mm Hg to obtain 340 g of the polyethersilicone of the formula (7), hereinafter referred to as polyethersilicone A, was obtained.

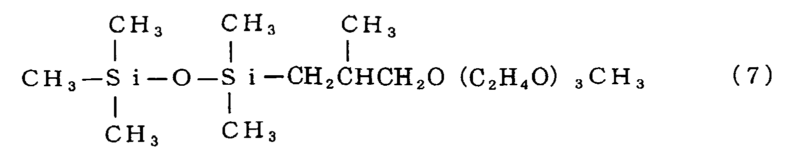

### Example 2

A reaction was carried out at a Vi/SiH ratio of 1/0.94.

In a flask, 218 g, i.e., 1 mole, of the same polyether of the formula (5) as the one used in Example 1 and 0.5 g of a 0.5% solution of chloroplatinic acid in toluene were placed, and heated to 70 degrees C under a nitrogen flow.

Then, 63 g, i.e. , 0.47 mole, of the tetramethyldisiloxane of the following formula (8) having a boiling point of 71 degrees C was added dropwise at 70 degrees C in 30 minutes. During the addition, the temperature in the flask rose to 95 degrees C. Subsequently, the temperature was raised to 110 degrees C by heating and the reaction 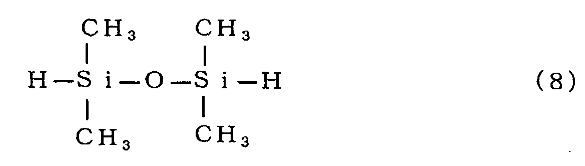 was allowed to continue at 110 degrees C for 3 hours.

The reaction solution thus obtained was subjected to vacuum distillation to obtain 260 g of the polyethersilicone of the formula (9), hereinafter referred to as polyethersilicone B, was obtained.

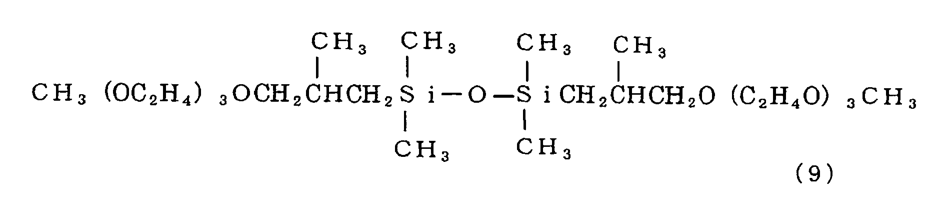

### Example 3

A reaction was carried out at a Vi/SiH ratio of 1/1.2.

In a flask, 262 g, i.e., 1 mole, of the polyether of the formula (10) and 0.5 g of a 0.5% solution of chloroplatinic acid in toluene were placed, and heated to 70 degrees C under a nitrogen flow.

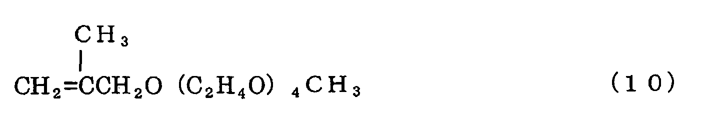

Then, 178 g, i.e., 1.2 moles, of the same pentamethyldisiloxane of the formula (6) as the one used in Example 1 having a boiling point of 85 degrees C were added dropwise at 70 degrees C in 30 minutes. During the addition, the temperature in the flask rose to 90 degrees C. Subsequently, the temperature was raised to 110 degrees C by heating and the reaction was allowed to continue at 110 degrees C for 3 hours.

The reaction solution thus obtained was subjected to vacuum distillation to obtain 370 g of the polyethersilicone of the formula (11) , hereinafter referred to as polyethersilicone C, was obtained.

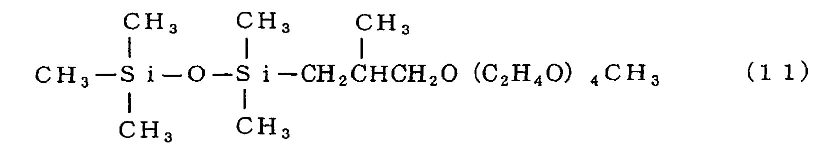

### Example 4

A reaction was carried out at a Vi/SiH ratio of 1/0.8.

In a flask, 174 g, i.e., 1 mole, of the polyether of the following formula (12) and 0.5 g of a 0.5% solution of chloroplatinic acid in toluene were placed, and heated to 70 degrees C under a nitrogen flow.

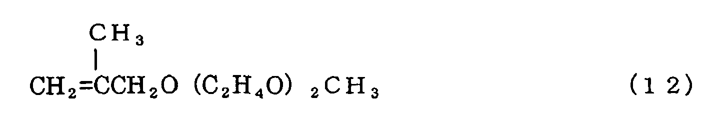

Then, 54 g, i.e., 0.4 mole, of the same tetramethyldisiloxane of the formula (8) as the one used in Example 2 having a boiling point of 71 degrees C was added dropwise at 70 degrees C in 30 minutes. During the addition, the temperature in the flask rose to 100 degrees C. Subsequently, the temperature was raised to 110 degrees C by heating and the reaction was allowed to continue at 110 degrees C for 3 hours.

The reaction solution thus obtained was subjected to vacuum distillation to obtain 180 g of polyethersilicone of the following formula (13), hereinafter referred to as polyethersilicone D, was obtained.

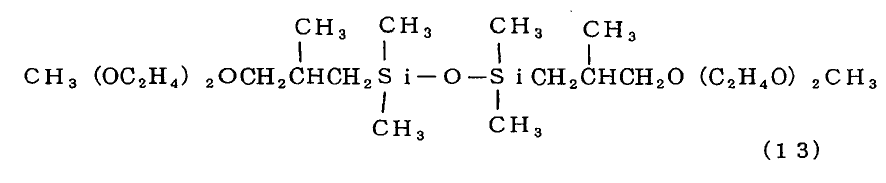

### Example 5

A reaction was carried out at a Vi/SiH ratio of 1/0.8.

In a flask, 160 g, i.e., 1 mole, of the polyether of the following formula (14) and 0.5 g of a 0.5% solution of chloroplatinic acid in toluene were placed, and heated to 70 degrees C under a nitrogen flow.

CH₂=CHCH₂O(C₂H₄O)₂CH₃ (14)

Then, 54 g, i.e., 0.4 mole, of the same tetramethyldisiloxane of the formula (8) as the one used in Example 2 having a boiling point of 71 degrees C was added dropwise at 70 degrees C in 30 minutes. During the addition, the temperature in the flask rose to 100 degrees C. Subsequently, the temperature was raised to 110 degrees C by heating and the reaction was allowed to continue at 110 degrees C for 3 hours.

The reaction solution thus obtained was subjected to vacuum distillation to obtain 160 g of polyethersilicone of the following formula (15), hereinafter referred to as polyethersilicone E, was obtained.

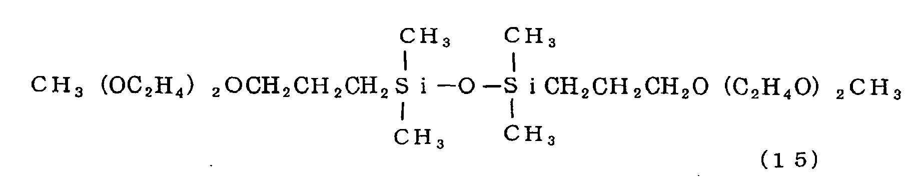

### Referential Example 1

A reaction was carried out at a Vi/SiH ratio of 1/0.94 and, then, further about 0.1 mole of the polyether was added.

In a flask, 204 g, i.e., 1 mole, of the polyether of the following formula (16) and 0.5 g of a 0.5% solution of chloroplatinic acid in toluene were placed, and heated to 70 degrees C under a nitrogen flow.

CH₂=CHCH₂O(C₂H₄O)₄CH₃ (16)

Then, 63 g, i.e., 0.47 mole, of the tetramethyldisiloxane of the formula (8) as used in Example 2 having a boiling point of 71 degrees C were added dropwise at 70 degrees C in 30 minutes. During the addition, the temperature in the flask rose to 95 degrees C. Subsequently, the temperature was raised to 110 degrees C by heating. After the reaction was allowed to continue at 110 degrees C for 3 hours, 19 g of the aforesaid polyether were added, and the reaction was allowed to continue at 110 degrees C for another 3 hours.

The reaction solution thus obtained was subjected to vacuum distillation to obtain 260 g of the polyethersilicone of the following formula (17), hereinafter referred to as polyethersilicone F, was obtained.

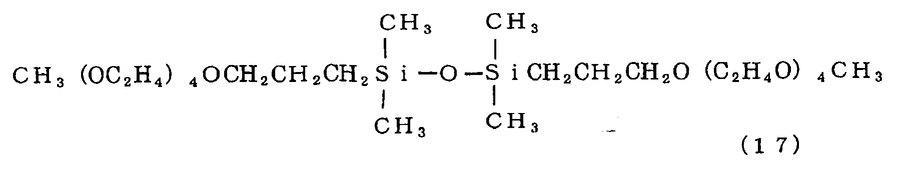

### Comparative Example 1

A reaction was carried out at a Vi/SiH ratio of 1/1.2.

The procedures in Example 1 were repeated except that 266 g, i.e., 1.2 moles, of the heptamethyltrisiloxane of the following formula (18) having a boiling point of 141 degrees C was used instead of the pentamethyldisiloxane used in Example 1. Obtained were 420 g of the polyethersilicone of the following formula (19) , hereinafter referred to as polyethersilicone G.

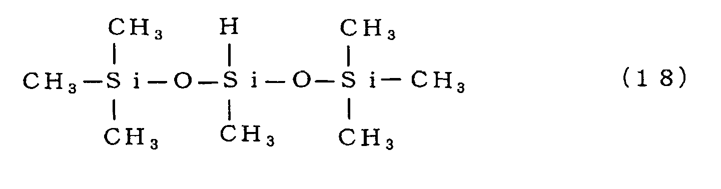

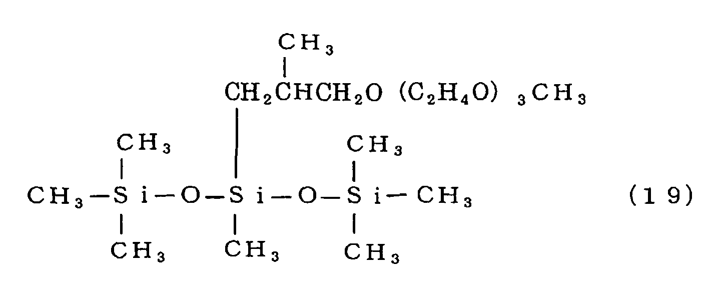

### Comparative Example 2

A reaction was carried out at a Vi/SiH ratio of 1/1.2.

The procedures in Example 3 were repeated except that 266 g, i.e. , 1.2 moles, of the heptamethyltrisiloxane of the following formula (18) having a boiling point of 141 degrees C as used in Comparative Example 1 was used instead of the pentamethyldisiloxane used in Example 3. Obtained were 450 g of the polyethersilicone of the following formula (20), hereinafter referred to as polyethersilicone H, was obtained.

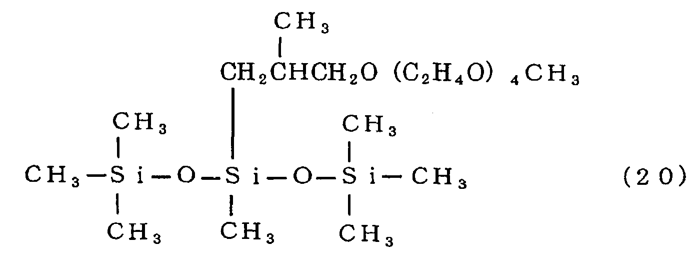

Table 1 shows several properties of the polyethersilicone prepared in the Examples, Referential Example and Comparative Examples.

**Table 1 Properties of the Polyethersilicone**

| | | | | |
|---|---|---|---|---|
| Polyether-silicone | Viscosity (25°C) | Refractive Index. (25°C) | Volatiles *² (105°C×3Hr) | Free Polyether*³ |
| A | 4. 9 | 1. 4298 | 2. 2% | 5% |
| B | 9. 7 | 1. 4441 | 3. 0% | 6% |
| C | 7. 2 | 1. 4330 | 2. 2% | 4% |
| D | 8. 7 | 1. 4420 | 0. 2% | 0% |
| E | 8. 2 | 1. 4425 | 0. 1% | 0% |
| F*1 | 9. 4 | 1. 4298 | 8. 9% | 15% |
| G | 6. 3 | 1. 4285 | 1. 9% | 5% |
| H | 9. 5 | 1. 4305 | 2. 2% | 6% |

| | | | | |
|---|---|---|---|---|
| *1 A nearly proportional relation between the amounts of the free polyether and the volatiles was observed. The larger amount of volatiles in the polyethersilicone F is due to the larger amount of free polyether. *2 An amount of volatiles was measured by precisely weighing 2 g of the obtained polyethersilicone in a 50 ml beaker, keeping the beaker at 105 degrees C for 3 hours in a hot-air circulating dryer, and weighing it after cooled to room temperature. A percentage of the decrease in weight was calculated. *3 An amount of the free polyether was calculated from an intensity of ¹H-NMR signals from protons bonded to an unsaturated bond in a ¹H-NMR spectrum of the obtained polyethersilicone. In Table 1, "0 %" for the free polyether means that the amount of the free polyether was below the detection limit in ¹H-NMR. These with "0 %" were analyzed further by capillary gas chromatography with a FID detector. It was found that the free polyether were below the detection limit for the free polyether in capillary gas chromatography, i.e., about 100 ppm. | | | | |

### Example 6

Ethylene carbonate (EC) and each of the polyethersilicones A to E, G, and H, prepared in the aforesaid Examples and Comparative Examples, were mixed in a volume ratio of 5:5 or 8:2 as shown in the following Table 2. In 1 litter of the mixed liquid obtained, 152 g, i.e., 1 mole, of LiPF₆ was dissolved to prepare an electrolytic solution. Using a conductometer, an ionic conductivity (mS/cm) at 20 degrees C of the electrolytic solution was measured. The results are as seen in Table 2.

**Table 2**

| No**.** | E C | Polyethersilicone | | | | | | | Ionic Conductivity |
|---|---|---|---|---|---|---|---|---|---|
| | | A | B | C | D | E | G | H | |
| 1 | 5 | 5 | - | - | - | - | - | - | 4.3 |
| 2 | 5 | - | 5 | - | - | - | - | - | 4.2 |
| 3 | 5 | - | - | 5 | - | - | - | - | 4.2 |
| 4 | 5 | - | - | - | 5 | - | - | - | 4.3 |
| 5 | 5 | - | - | - | - | 5 | - | - | 4.3 |
| 6 | 5 | - | - | - | - | - | 5 | - | 3.8 |
| 7 | 5 | - | - | - | - | - | - | 5 | 3.9 |
| 8 | 8 | 2 | - | - | - | - | - | - | 6.8 |
| 9 | 8 | - | 2 | - | - | - | - | - | 6. 5 |
| 10 | 8 | - | - | 2 | - | - | - | - | 6. 7 |
| 11 | 8 | - | - | - | 2 | - | - | - | 6.9 |
| 1 2 | 8 | - | - | - | - | 2 | - | - | 7. 0 |
| 13 | 8 | - | - | - | - | - | 2 | - | 6.0 |
| 14 | 8 | - | - | - | - | - | - | 2 | 6.1 |

### INDUSTRIAL APPLICABILITY

As can be seen from Table 2, the present polyethersilicone gives an electrolytic solution which is more conductive than the conventional polyethersilicone. The present polyethersilicone is safer because it contains less polyether impurities having low flash points.

## Claims

1. A polyethersilicone represented by the following formula (1), said polyethersilicone being modified at an end of a silicone chain thereof, 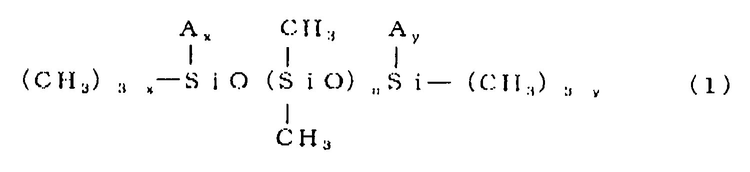 wherein A is selected from the group consisting of an organic group represented by the following formula (i) and an organic group represented by the following formula(ii),
-CₐH₂ₐO(C₂H₄O)_{b}R (i)
wherein a is 3 or 4, b is an integer of from 1 to 3, and R is a CH₃ group or a C₂H₅ group,
-CH₂CH(CH₃)CH₂O(C₂H₄O)_{c}R (ii)
wherein c is an integer of from 1 to 6, and R is a CH₃ group or a C₂H₅ group,
n is an integer of from 0 to 3, x is 0 or 1, y is 0 or 1 and 1≤ x+y, **characterized in that** a weight ratio, determined by H-NMR, of a polyether which is not bonded to a silicone chain of the polyethersilicone to a total of the non-bonded polyether and the polyether residue bonded to the silicone chain of the polyethersilicone is 8 % or less.

2. The polyethersilicone according to claim 1, wherein the polyethersilicone has a viscosity at 25 degrees C of from 1 to 20 mm²/s.

3. The polyethersilicone according to claim 1 or 2, wherein the polyethersilicone is one prepared by reacting a polyether having a methallyl group, a butenyl group or an allyl group at an end thereof with a hydrogensilicone having a hydrosilyl group at least one end thereof in the presence of a noble metal catalyst.

4. A solvent for an electrolytic solution, comprising the polyethersilicone according to any one of claims 1 to 3.

5. A method of preparing a polyethersilicone by reacting a polyether having an unsaturated bond at an end thereof with a hydrogensilicone in the presence of a noble metal catalyst, **characterized in that** the method comprising the steps of:
reacting a polyether represented by the following formula (3) or (4) with a hydrogensilicone,
CₐH₂ₐ₋₁O(C₂H₄O)_{b}R (3) 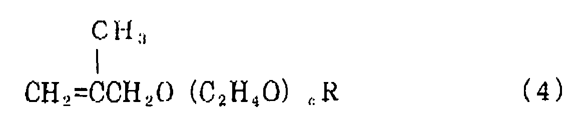
wherein a is 3 or 4, b is an integer of from 1 to 3, and R is a CH₃ group or a C₂H₅ group,
wherein c is an integer of from 1 to 6, and R is a CH₃ group or a C₂H₅ group, and
subjecting the reaction mixture to vacuum distillation, to thereby attain a weight ratio, determined by H-NMR, of the polyether which has not been reacted with the hydrogensilicone to the starting polyether of 8 % or less.

## Patentansprüche

1. Polyethersilikon, das durch die folgende Formel (1) dargestellt wird, wobei das Polyethersilikon an einem Ende einer Silikonkette modifiziert ist, 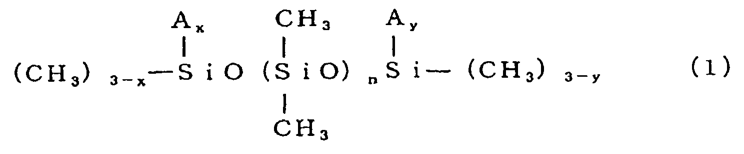 worin A ausgewählt ist aus der Gruppe, bestehend aus einer organischen Gruppe, die durch die folgende Formel (i) dargestellt wird und einer organischen Gruppe, die durch die folgende Formel (ii) dargestellt wird,
-CₐH₂ₐO(C₂H₄O)_{b}R (i)
worin a 3 oder 4 ist, b eine ganze Zahl von 1 bis 3 ist und R eine CH₃-Gruppe oder eine C₂H₅-Gruppe ist,
-CH₂CH(CH₃)CH₂O(C₂H₄O)_{c}R (ii)
worin c eine ganze Zahl von 1 bis 6 ist und R eine CH₃-Gruppe oder eine C₂H₅-Gruppe ist,
n eine ganze Zahl von 0 bis 3 ist, x 0 oder 1 ist, y 0 oder 1 ist und 1≤x+y, **dadurch gekennzeichnet , dass** das Gewichtsverhältnis, bestimmt durch H-NMR, eines Polyethers, der nicht an eine Silikonkette des Polyethersilikons gebunden ist, zu der Summe des nicht-gebundenen Polyethers und des an die Silikonkette des Polyethersilikons gebundenen Polyetherrests 8% oder weniger ist.

2. Polyethersilikon nach Anspruch 1, wobei das Polyethersilikon eine Viskosität bei 25°C von 1 bis 20 mm²/s hat.

3. Polyethersilikon nach Anspruch 1 oder 2, wobei das Polyethersilikon eines ist, das durch Umsetzung eines Polyethers, der eine Methallylgruppe, eine Butenylgruppe oder eine Allylgruppe an einem Ende desselben hat, mit einem Hydrogensilikon, das eine Hydrosilylgruppe an wenigstens einem Ende davon hat, in Gegenwart eines Edelmetallkatalysators hergestellt wird.

4. Lösungsmittel für eine elektrolytische Lösung, das das Polyethersilikon nach einem der Ansprüche 1 bis 3 umfasst.

5. Verfahren zur Herstellung eines Polyethersilikons durch Umsetzung eines Polyethers, der eine ungesättigte Bindung an einem Ende hat, mit einem Hydrogensilikon in Gegenwart eines Edelmetallkatalysators, **dadurch gekennzeichnet , dass** das Verfahren die folgenden Schritte umfasst:
- Umsetzen eines Polyethers, der durch die folgende Formel (3) oder (4) dargestellt wird, mit einem Hydrogensilikon,
CaH₂ₐ₋₁O(C₂H₄O)_{b}R (3) 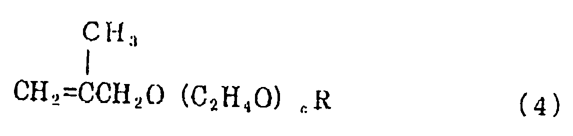
worin a 3 oder 4 ist, b eine ganze Zahl von 1 bis 3 ist und R eine CH₃-Gruppe oder eine C₂H₅-Gruppe ist,
wobei c eine ganze Zahl von 1 bis 6 ist und R eine CH₃-Gruppe oder eine C₂H₅-Gruppe ist, und
- Unterwerfen des Reaktionsgemisches einer Vakuumdestillation,
um **dadurch** ein Gewichtsverhältnis, bestimmt durch H-NMR, des Polyethers, der nicht mit dem Hydrogensilikon umgesetzt wurde, zu dem Ausgangspolyether von 8% oder weniger zu erhalten.

## Revendications

1. Polyéthersilicone représentée par la formule suivante (1), ladite polyéthersilicone étant modifiée à une extrémité d'une chaîne silicone de celle-ci, 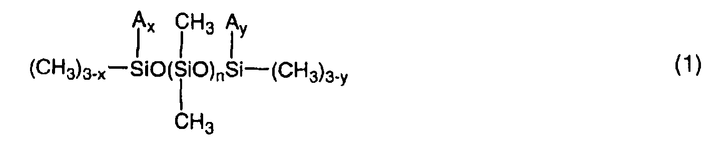 dans laquelle A est choisi dans le groupe constitué par un groupe organique représenté par la formule suivante (i) et un groupe organique représenté par la formule suivante (ii),
-CₐH₂ₐO(C₂H₄O)_{b}R (i)
dans laquelle a est 3 ou 4, b est un nombre entier de 1 à 3, et R est un groupe CH₃ ou un groupe C₂H₅,
-CH₂CH(CH₃)CH₂O(C₂H₄O)_{c}R (ii)
dans laquelle c est un nombre entier de 1 à 6, et R est un groupe CH₃ ou un groupe C₂H₅, n est un nombre entier de 0 à 3, x est 0 ou 1, y est 0 ou 1 et 1 ≤ x+y, **caractérisée en ce qu'**un rapport pondéral, déterminé par H-RMN, d'un polyéther qui n'est pas lié à une chaîne silicone de la polyéthersilicone au total du polyéther non lié et du reste polyéther lié à la chaîne silicone de la polyéthersilicone est 8 % ou moins.

2. Polyéthersilicone selon la revendication 1, dans laquelle la polyéthersilicone a une viscosité à 25 degrés C de 1 à 20 mm²/s.

3. Polyéthersilicone selon la revendication 1 ou 2, dans laquelle la polyéthersilicone en est une préparée par réaction d'un polyéther ayant un groupe méthallyle, un groupe butényle ou un groupe allyle à une extrémité de celui-ci avec une hydrogénosilicone ayant un groupe hydrosilyle à au moins une extrémité de celle-ci en présnece d'un catalyseur de métal noble.

4. Solvant pour une solution électrolytique, comprenant la polyéthersilicone selon l'une quelconque des revendications 1 à 3.

5. Procédé de préparation d'une polyéthersilicone par réaction d'un polyéther ayant une liaison insaturée à une extrémité de celui-ci avec une hydrogénosilicone en présence d'un catalyseur de métal noble, **caractérisé en ce que** le procédé comprend les étapes consistant à :
faire réagir un polyéther représenté par la formule suivante (3) ou (4) avec une hydrogénosilicone,
CₐH₂ₐ₋₁O(C₂H₄O)_{b}R (3) 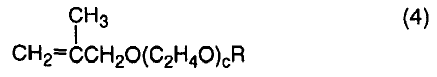
dans laquelle a est 3 ou 4, b est un nombre entier de 1 à 3, et R est un groupe CH₃ ou un groupe C₂H₅,
dans laquelle c est un nombre entier de 1 à 6, et R est un groupe CH₃ ou un groupe C₂H₅, et
soumettre le mélange réactionnel à une distillation sous vide, pour ainsi atteindre un rapport pondéral, déterminé par H-RMN, du polyéther qui n'a pas réagi avec l'hydrogénosilicone au polyéther de départ de 8 % ou moins.
